# NEUE EUROPÄISCHE PATENTSCHRIFT

(11) **EP 2 930 378 B2**
(45) Veröffentlichungstag und Bekanntmachung des Hinweises auf die Entscheidung über den Einspruch: **26.01.2022**
(45) Hinweis auf die Patenterteilung: 26.12.2018
(21) Anmeldenummer: 14164469.0
(22) Anmeldetag: 11.04.2014
(51) Int. Cl.: F16B 25/00, F16B 25/10, F16B 5/02

(54) **Distanzbefestigungselement**
Spacer fixing element
Élément espaceurs de fixation

(43) Veröffentlichungstag der Anmeldung: 14.10.2015
(73) Patentinhaber: EJOT Baubefestigungen GmbH, 57334 Bad Laasphe (DE)
(72) Erfinder: Heinrich, Kostja, 57319 Bad Berleburg-Weidenhausen (DE)
(74) Vertreter: Puschmann Borchert Kaiser Klettner Patentanwälte Partnerschaft mbB

(56) Entgegenhaltungen:
- EP-A2- 1 990 551
- EP-A2- 1 990 551
- WO-A1-89/02504
- WO-A1-89/02504
- WO-A1-2013/109852
- GB-A- 2 169 051
- US-A- 3 124 031
- US-A- 4 653 244
- US-A1- 2004 141 827
- US-A1- 2007 128 001
- US-A1- 2009 010 734
- US-A1- 2009 010 734
- US-A1- 2012 294 693

## Beschreibung

Die Erfindung betrifft ein Distanzbefestigungselement zur distanzierten Verbindung zweier Bauteile, gemäß dem Oberbegriff des Anspruchs 1.

Gattungsgemäße Distanzbefestigungselemente, insbesondere Schrauben zur Abstandsfixierung, sind aus der DE 20 2005 005 342 U1 sowie der EP 1 034 379 B1 bekannt.

Gemäß der Lehre der EP 1 235 988 B1 ist ein Distanzbefestigungselement mit zwei Schraubgewinden zum Eindrehen in zwei beabstandete Bauteile offenbart. Zwischen den beiden Gewindegängen ist ein Bohrelement angeordnet, welches einen Durchmesser aufweist, der größer ist als der Durchmesser des der Bohrspitze zugewandten Gewindegangs, und kleiner ist als der Durchmesser des am Kopf angeordneten Gewindegangs.

Durch Vorsehung eines solchen Bohrelements kann ein Einbringen eines Distanzbefestigungselements ohne Vorbohren des Blechteils erfolgen. Das Bohrelement bildet insoweit einen Anschlag am zweiten Bauelement, als dass zwischen dem Bohrelement und dem der Spitze zugewandten Gewindeabschnitt ein gewindefreier Teil liegt, in welchem das zweite Bauteil zu liegen kommt, und in welchem das Distanzbefestigungselement vortriebsfrei dreht. Durch Unterbindung des Vortriebs soll das Bohrelement als Anschlag am zweiten Bauteil dienen.

Es ist Aufgabe der Erfindung ein solches Distanzverbindungselement derart zu verbessern, dass eine höhere Prozesssicherheit gewährleistet wird.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise umfasst ein Distanzbefestigungselement, zur Befestigung eines ersten Bauteils distanziert zu einem zweiten Bauteil, einen Kopf, der in einen Schaft übergeht, der wiederum in einer selbstbohrenden Spitze endet. Nach der Spitze, in Richtung Kopf, ist ein Gewindeabschnitt vorgesehen, der ein Gewinde mit einer ersten Drehrichtung aufweist, wobei unter Drehung in erster Drehrichtung ein Loch in das erste Bauteil eingebracht werden kann, durch welches der erste Gewindeabschnitt hindurchgeführt wird. Ferner ist nachfolgend zum ersten Gewindeabschnitt ein Anschlagelement vorgesehen, das an dem zweiten Bauteil bei Drehung in erster Drehrichtung einen Anschlag bildet.

Erfindungsgemäß, ist das Anschlagselement als zweiter Gewindeabschnitt mit einem Gewinde mit einer der ersten Drehrichtung entgegengesetzten zweiten Drehrichtung ausgebildet ist, wobei der Gewindeabschnitt derart gestaltet ist, dass bei Drehung in zweiter Drehrichtung des Distanzbefestigungselements das Distanzbefestigungselement durch das nach der Penetration des ersten Bauteils durch den ersten Gewindeabschnitt verbliebene Loch im ersten Bauteil geschraubt werden kann, wonach es unter Drehung in erster Drehrichtung am zweiten Bauteil einen Anschlag bildet. Ferner ist der Bereich zwischen dem dem Kopf zugewandten Auslauf des Gewindes des zweiten Gewindeabschnitts und dem Kopf derart gestaltet, dass dieser wenigstens unter Drehung in erster Drehrichtung durch das verbliebene Loch im ersten Bauteil geführt werden kann.

Auf diese Weise kann durch einen Drehrichtungswechsel eine einfache und schnelle Verschraubung des Distanzbefestigungselements erfolgen. Durch ein derartiges Distanzbefestigungselement wird ein definierter Abstand der beiden Bauteile, die insbesondere in Form von Blechen ausgebildet sind, eingestellt.

Gemäß der Erfindung ist der Abstand des dem Kopf zugewandten Endes des zweiten Gewindeabschnitts zur Spitze geringer als der Abstand des der Spitze zugewandten Endes des zweiten Gewindeabschnitts zur Unterseite des Kopfes. Dadurch wird gewährleistet, dass der zweite Gewindeabschnitt das erste Bauteil vollständig durchdringt, bevor diese Bohrspitze in das zweite Bauteil eindringt.

Gemäß einer weiteren bevorzugten Ausführungsform, kann die erste Drehrichtung eine Rechtsdrehung sein und entsprechend der erste Gewindeabschnitt ein Rechtsgewinde aufweisen. Folglich ist die entgegengesetzte zweite Drehrichtung dann eine Linksdrehung und der zweite Gewindeabschnitt weist somit ein Linksgewinde auf. Dies entspricht dem gängigen Standard für Schraubendrehrichtungen und sorgt für eine intuitive Verwendung.

Zwischen dem ersten Gewindeabschnitt und dem zweiten Gewindeabschnitt kann ein gewindefreier Bereich vorgesehen sein. So kann, insbesondere bei Vorliegen eines plattenförmigen Befestigungsbereichs des zweiten Bauteils, der zweite Gewindeabschnitt in Abhängigkeit der Dicke des Befestigungsbereichs des zweiten Bauteils von dem ersten Gewindeabschnitt derart beabstandet sein, dass nachdem der Befestigungsbereich des zweiten Bauteils vollständig durchdrungen wurde, der erste Gewindeabschnitt nicht mehr in radialem Eingriff mit dem Befestigungsbereich des zweiten Bauteils steht. Dies sorgt für einen Überdrehschutz im zweiten Bauteil, da, sobald der erste Gewindeabschnitt den Befestigungsbereich durchdrungen hat, kein weiterer Vortrieb des Distanzbefestigungselements mehr erfolgt.

Der insbesondere plattenförmige Befestigungsbereich kommt dann in einem gewindefreien Bereich zwischen dem ersten Gewindeabschnitt und dem zweiten Gewindeabschnitt zu liegen. Das Distanzbefestigungselement umschließt so mit seinen Gewindeausläufen den Befestigungsbereich und legt diesen in axialer Richtung auf diese Weise im Befestigungsbereich sowohl in Zug- als auch DruckRichtung fest.

In einer besonders vorteilhaften Weiterbildung kann das Gewinde des ersten und/oder des zweiten Gewindeabschnitts derart ausgestaltet sein, dass dieses, wenigstens an dem dem jeweils anderen Gewinde zugewandten Ende, in einer Ebene orthogonal zur Schraubenachse ausläuft.

Dadurch wird eine möglichst großflächige Anlagefläche des ersten und zweiten Gewindeabschnitts erreicht, wodurch die Auszugs- und Eindrückfertigkeit in den Befestigungsbereich des zweiten Bauteils erhöht wird, und entsprechend eine festere Verbindung der beiden Bauteile gewährleistet wird.

In einer weiteren vorteilhaften Ausführungsform, kann die Anlagefläche des ersten und zweiten Gewindeabschnitts an dem zweiten Bauteil weiter vergrößert werden, indem der Winkel der dem Bauteil in seiner Befestigungslage zugewandte Gewindeflanke mit der Höhe des Gewindes geringer ist, als der Winkel der dem Bauteil abgewandten Gewindeflanke. Beispielsweise dem Bauteil in Einbaulage zugewandt ist das von der Spitze abgewandte Ende des ersten Gewindeabschnitts und das der Spitze zugewandte Ende des zweiten Gewindeabschnitts.

Vorzugsweise kann der zweite Gewindeabschnitt auch ein mehrgängiges Gewinde aufweisen, insbesondere ein Doppelgewinde aufweisen. Dadurch werden eine Vielzahl von Gewindeausläufen, insbesondere zwei Gewindeausläufe, bereitgestellt, welche in Druckrichtung das Distanzbefestigungselement gegenüber dem Befestigungsbereich des zweiten Bauteils stützen.

Die Steigung des Gewindes im ersten und zweiten Gewindeabschnitt ist insbesondere identisch. Das sorgt für eine gleichmäßige Vortriebsgeschwindigkeit.

Gemäß einer weiteren vorteilhaften Ausgestaltung kann der Außendurchmesser des Gewindes des zweiten Gewindeabschnitts größer oder gleich dem Außendurchmesser des ersten Gewindeabschnitts sein. Durch dieses Verhältnis kann sichergestellt werden, dass in Druckrichtung eine Abstützung am Befestigungsbereich des zweiten Bauteils gewährleistet ist.

In besonders vorteilhafter Weise kann zwischen dem zweiten Gewindeabschnitt und Kopf ein dritter Gewindeabschnitt vorgesehen sein, der ein Gewinde in erster Drehrichtung aufweist, welches als Stützgewinde wirkt. Dieser dritte Gewindeabschnitt ist insbesondere derart gestaltet, dass dieser unter Drehung in erster Drehrichtung, das erste Bauteil über das verbliebene Loch in Richtung des Kopfes zieht.

Vorzugsweise kann zwischen dem dritten Gewindeabschnitt und dem Kopf des Distanzbefestigungselements ein gewindefreier Bereich vorgesehen sein. Dieser gewindefreie Bereich kann an das erste Bauteil derart angepasst sein, dass der Befestigungsbereich des ersten Bauteils zwischen dem Kopf und dem dritten Gewindeabschnitt zu liegen kommt. Bei entsprechender Gestaltung des Stützgewindes kann der Befestigungsbereich des ersten Bauteils, nachdem er von dem Stützgewinde durchdrungen wurde, von dem Stützgewinde im gewindefreien Bereich abgestützt werden.

In einer weiteren Ausgestaltung kann zwischen dem zweiten Gewindeabschnitt und dem dritten Gewindeabschnitt ein gewindefreier Teil am Schafts vorgesehen sein. Dadurch kann auf einfache Weise eine Gestaltung bereitgestellt werden, durch welche große Abstände zwischen dem ersten und dem zweiten Bauteil schnell überbrückt werden können.

Gemäß einem weiteren Aspekt der Erfindung betrifft diese einen Bauteilverbund, umfassend ein erstes Bauteil mit einem insbesondere plattenartigen Befestigungsbereich, sowie ein zweites Bauteil aufweisend einen insbesondere plattenartigen Befestigungsbereich, wobei diese beiden Bauteile über ein zuvor beschriebenes Distanzbefestigungselement verbunden sind.

Der Bauteilverbund umfasst insbesondere ein zuvor beschriebenes Distanzbefestigungselement, bei welchem zwischen dem ersten Gewindeabschnitt und dem zweiten Gewindeabschnitt ein gewindefreier Bereich vorgesehen ist.

Vorzugsweise entspricht der Abstand zwischen den beiden Gewindeabschnitten der Dicke des Befestigungsbereichs des zweiten Bauteils. Der Abstand zwischen den Gewindeabschnitten ist insbesondere größer oder gleich der Dicke des Befestigungsbereichs des ersten Bauteils.

Die Befestigungsbereiche, also die Bereiche, in welche das Distanzbefestigungselement eingebracht wird, können regelmäßig eine Dicke von 0,5 mm - 2 mm für das erste Bauteil und eine Dicke von 1 mm - 4 mm für das zweite Bauteil aufweisen. Ein Bauteil kann auch aus einem Verbund übereinanderliegender Teile bestehen.

In einer bevorzugten Ausführungsform umfasst der Bauteilverbund eine Kassettenwand, wobei das erste Bauteil als Ober-bzw. Außenschale, insbesondere eine Trapezblechaußenschale, und das zweite Bauteil als Unterkonstruktion, insbesondere eine Profilblechaußenbekleidung, ausgebildet ist. Zwischen der Außenschale und der Unterkonstruktion kann auch eine Schicht Dämmmaterial vorgesehen sein.

Durch Verbinden der Außenschale mit der Unterkonstruktion über das erfindungsgemäße Distanzbefestigungselement kann auf schnelle, einfache und prozesssichere Weise eine Kassettenwand bereitgestellt werden.

Gemäß einem weiteren Aspekt der Erfindung betrifft diese ein Verfahren zur Herstellung eines vorbeschriebenen Bauteilverbunds, insbesondere einer Kassettenwand.

In bekannter Weise wird gemäß einem Verfahren zur distanzierten Befestigung zweier Bauteile mit einem Distanzbefestigungselement, dieses mit dem ersten und dem zweiten Bauteil je in einem Befestigungsbereich mit diesen verbunden, wobei ein definierter Abstand zwischen den Bauteilen durch ein Distanzbefestigungselement eingestellt wird.

Erfindungsgemäß ist weiter vorgesehen, dass zuerst das Distanzbefestigungselement in einer ersten Drehrichtung in das erste Bauteil eingeschraubt wird, dann das Distanzbefestigungselement in einer der ersten Drehrichtung entgegengesetzten zweiten Drehrichtung durch das erste Bauteil hindurchgeschraubt wird und anschließend das Distanzbefestigungselement unter Drehung in erster Drehrichtung in das zweite Bauteil eingeschraubt wird.

Es versteht sich, dass auch eine sogenannte Kassettenwand auf diese einfache Weise hergestellt werden kann, bei welcher eine Außenschale mit einer dahinter liegenden Unterkonstruktion verbunden werden kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Seitenansicht eines Distanzbefestigungselements,
- Fig. 2: eine Seitenansicht eines Distanzbefestigungselements,
- Fig. 3: eine Seitenansicht eines Distanzbefestigungselements,
- Fig. 4: eine Seitenansicht eines Distanzbefestigungselements,
- Fig. 5a: einen ersten Schritt eines Ablaufs zur Herstellung eines Bauteilverbunds,
- Fig. 5b: einen zweiten Schritt zur Herstellung eines Bauteilverbunds, und
- Fig. 5c: einen dritten Schritt zur Herstellung eines Bauteilverbunds.

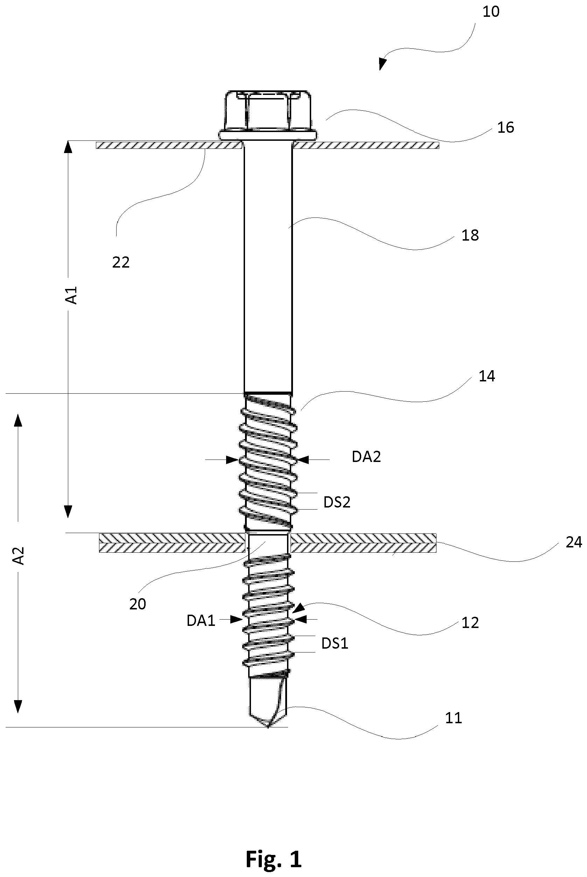

Fig. 1 zeigt ein Distanzbefestigungselement 10 umfassend eine selbstbohrende Spitze 11 sowie einen daran anschließenden ersten Gewindeabschnitt 12. Ferner umfasst das Distanzbefestigungselement 10 einen zweiten Gewindeabschnitt 14 der beabstandet zum Kopf 16 angeordnet ist. Zwischen dem zweiten Gewindeabschnitt 14 und dem Kopf 16 liegt ein gewindefreier Schaftteil 18, der kein Gewinde aufweist. Der erste Gewindeabschnitt 12 ist so gestaltet, dass dieser ein Rechtsgewinde trägt, das die Steigung DS1 und den Außendurchmesser DA1 hat. Der zweite Gewindeabschnitt 14 trägt ein Linksgewinde mit einem Außendurchmesser DA2 mit einer Steigung DS2. Der Außendurchmesser DA1 des ersten Gewindeabschnitts 12 ist kleiner als der Außendurchmesser DA2 des zweiten Gewindeabschnitts 14.

Das Linksgewinde des zweiten Gewindeabschnitts 14 läuft beabstandet in axialer Richtung zum Rechtsgewinde des ersten Gewindeabschnitts 12 aus. Zwischen dem Rechtsgewinde 12 und dem Linksgewinde 14 befindet sich ein gewindefreier Schaftteil 20. In diesem gewindefreien Schaftteil 20 kann bei entsprechender Abstimmung des Distanzbefestigungselements 10 auf den Bauteilverbund 22, 24 ein zweites Bauteil 24 nach den Gewindeabschnitten 12, 14 umschlossen aufgenommen werden. Der erste Gewindeabschnitt 12 ist so gestaltet, dass dieser bei Rechtsdrehung durch das von der Spitze 11 geformte Loch im ersten Bauteil 22 und im zweiten Bauteil 24 dringt. Der zweite Gewindeabschnitt 14 ist so ausgebildet, dass dieser bei Linksdrehung durch das ausgeformte Loch geführt werden kann. Bei Rechtsdrehung bildet das Linksgewinde 14 gegenüber dem zweiten Bauteil 24 einen Anschlag. Dadurch wird der Abstand des zweiten Bauteils 24 von der Unterseite des Kopfes 16 definiert. So kann die Einstellung des Abstandes eines ersten Bauteils 22 von dem zweiten Bauteil 24 ausgehend von dem Maximalabstand der Unterseite des Kopfes 16 zum Auslauf des Linksgewindes 14 am zweiten Bauteil 24 eingestellt werden. Vorzugsweise kann dieser über Elemente, wie Unterlegscheiben oder Spannscheiben, die zwischen Kopf 16 und erstem Bauteil 22 eingebracht werden können, beeinflusst werden.

Eine solche Ausführung gemäß Fig. 1 ist besonders vorteilhaft, wenn zwischen dem ersten Bauteil 22 und dem zweiten Bauteil 24 ein Füllelement vorgesehen ist, das eine die beiden Bauteile 22, 24 auseinander drückende Kraft auf diese aufbringt.

Die Steigung des Rechtsgewindes DS1 entspricht in dieser Ausführungsform der Steigung des Linksgewindes DS2. Auf diese Weise wird ein gleichmäßiger Vortrieb bei der Durchbohrung des ersten Bauteils 22 im Rechtslauf und im Linkslauf gewährleistet. Die Spitze 11 formt ein Loch in das obere Bauteil 24, welches durch den anschließenden ersten Gewindeabschnitt 12 noch aufgeweitet wird. Insbesondere ist bei dieser Ausgestaltung der gewindefreie Schaftteil 20 zwischen dem ersten Gewindeabschnitt 12 und dem zweiten Gewindeabschnitt 14 so bemessen, dass dieser größer ist als die Dicke des ersten Bauteils 22 an der Durchdringstelle. Nach Durchdringen des, durch die Spitze 11 und das Gewinde 12, vorgeformten Lochs im ersten Bauteil 22 im Rechtslauf, kann das Distanzbefestigungselement 10 im Linkslauf durch das erste Bauteil 22 gedreht werden. Aufgrund des gewindefreien Abschnittes 18, kann dann der Distanzbefestiger 10 durch das Loch im ersten Bauteil 22 geschoben werden, bis die Bohrspitze 11 am zweiten Bauteil 24 anliegt. Unter Rechtsdrehung kann dann ein Loch in das zweite Bauteil 24 eingebracht werden, in welches das Distanzbefestigungselement 10 hineingezogen wird, bis das zweite Bauelement 24 im gewindefreien Bereich 20 zwischen dem ersten Gewindeabschnitt 12 und dem zweiten Gewindeabschnitt 14 zu liegen kommt.

Das Distanzbefestigungselement 10 ist derart bemessen, dass der Abstand A1 von der Kopfunterseite zu dem der Spitze 11 zugewandten Ende des zweiten Gewindeabschnitts 14 größer ist als der Abschnitt A2 von dem dem Kopf 16 zugewandten Ende des zweiten Gewindeabschnitts 14 zur Spitze 11.

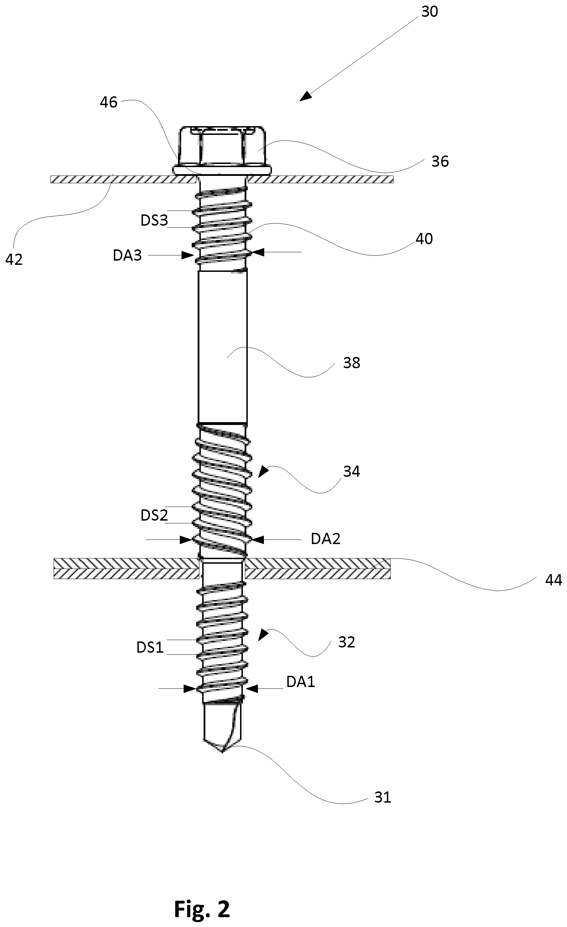

Fig. 2 zeigt ein Distanzbefestigungselement 30 mit einer Spitze 31, einem ersten Gewindeabschnitt 32, einem zweiten Gewindeabschnitt 34, einem Kopf 36, einem gewindefreien Teil 38, der zwischen dem zweiten Gewindeabschnitt 34 und dem Kopf 36 liegt. Im Unterschied zur Fig. 1 ist zwischen dem zweiten Gewindeabschnitt 34, der ein Linksgewinde und dem Kopf 36 ein dritter Gewindeabschnitt 40 vorgesehen. Dieser trägt, wie der erste Gewindeabschnitt 32, ein Rechtsgewinde. Das Gewinde 40 das den Außendurchmesser DA3 hat, der dem Außendurchmesser des zweiten Gewindeabschnitts DA2 entspricht, sorgt bei Eindrehung des Distanzbefestigungselement in Rechtsdrehung dafür, dass das erste Bauelement 42 gegen den Kopf 36 getrieben wird. Das erste Bauteil 42 wird dann zwischen dem Kopf 36 und dem dritten Gewindeabschnitt 40, welcher auch als Stützgewinde bezeichnet wird, gehalten. Auf diese Weise kann die Distanz zwischen dem ersten Bauteil 42 und dem zweiten Bauteil 44 auch ohne eine Vorspannung zwischen den Bauteilen 42, 44 genau eingestellt werden.

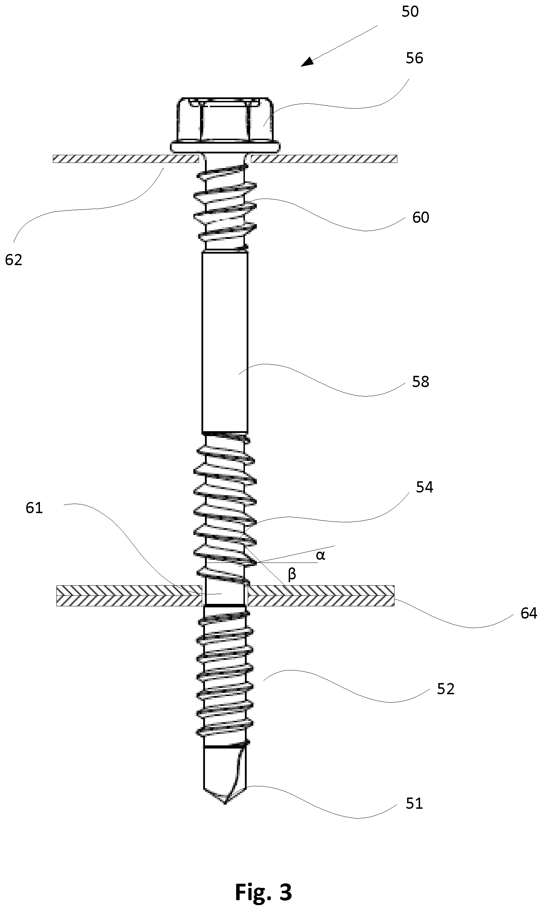

Fig. 3 zeigt eine ähnliche Ausgestaltung wie Fig. 2. Das Distanzbefestigungselement 50 weist dabei ebenfalls eine Spitze 51, einen ersten Gewindeabschnitt 52, einen zweiten Gewindeabschnitt 54 sowie einen Kopf 56 auf. Zwischen dem Kopf 56 und dem zweiten Gewindeabschnitt 54 ist ein gewindefreier Teil 58 vorgesehen. Ferner ist ein dritter Gewindeabschnitt 60 vorgesehen, der als Stützgewinde dient. Im Gegensatz zu Fig. 2 weisen der zweite Gewindeabschnitt 54 und der dritte Gewindeabschnitt 60 einen Winkel α zwischen der in Einbaulage dem zweiten Bauteil 64 abgewandten Gewindeflanke mit der Gewindehöhe auf, der kleiner ist als der Winkel β, den die dem zweiten Bauteil 64 abgewandten Gewindeflanke mit der Gewindehöhe einschließt.

Eine entsprechende Gestaltung liegt auch für den zweiten Gewindeabschnitt 54 bezüglich des zweiten Bauteils 64 vor, welches in dem gewindefreien Bereich 61 zu liegen kommt. Der gewindefreie Bereich 61 ist auch hier so dimensioniert, dass dieser auf die Dicke bzw. Stärke des zweiten Bauteils 64 im Befestigungsbereich abgestimmt ist.

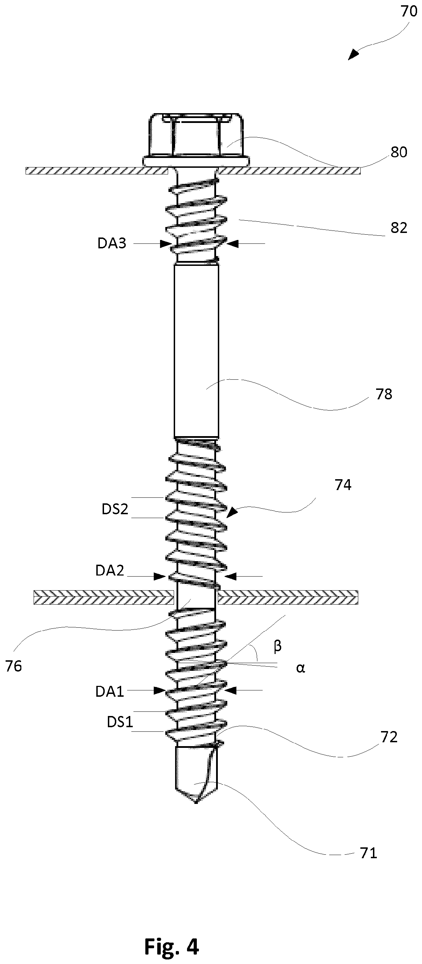

Fig. 4 zeigt eine weitere Ausgestaltung eines Distanzbefestigungselements 70. Dieses weist ebenfalls eine Spitze 71, einen ersten Gewindeabschnitt 72, einen zweiten Gewindeabschnitt 74, einen gewindefreien Bereich 78, einen Kopf 80 sowie einen dritten Gewindeabschnitt 82 auf. Zwischen dem ersten Gewindeabschnitt 72 und dem zweiten Gewindeabschnitt 74 ist ein gewindefreier Bereich 76 vorgesehen. Gemäß dieser Ausführung sind die Außendurchmesser der Gewinde des Gewindeabschnitts 72 und 74 und des dritten Gewindeabschnitts 82 gleich groß wobei der Flankenwinkel der Gewindeabschnitte derart gewählt ist, dass er dem Bauteil zugewandten Ende und gegenüber der Höhe des Gewindegangs einen kleineren Winkel aufweist als auf der dem Bauteil abgewandten Seite, ähnlich Fig. 3.

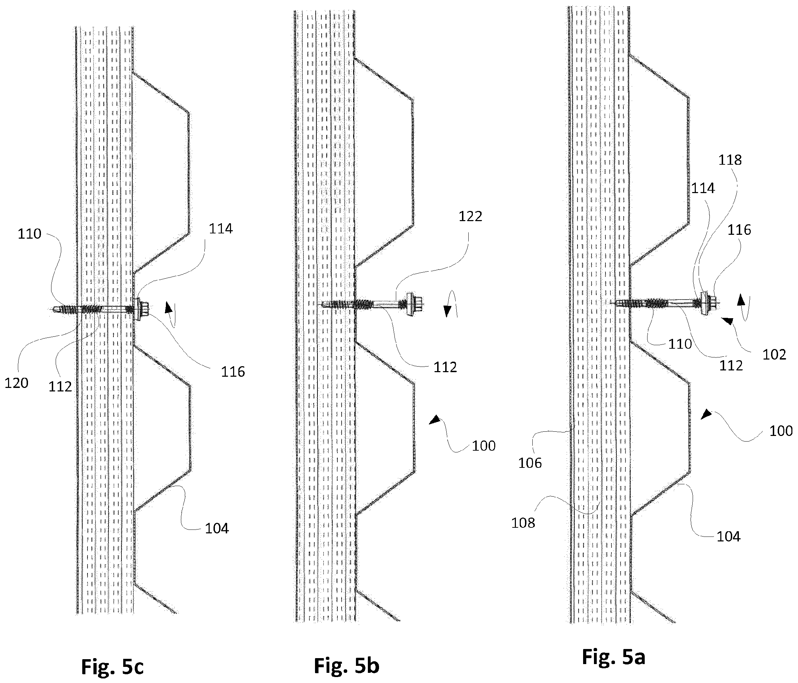

Fig. 5a bis Fig. 5c zeigen ein Verfahren zur Herstellung einer Kassettenwand 100 mit einer Außenschale 104, einer Profilschiene 106 und einer Dämmmateriallage 108. Das Distanzbefestigungselement 102 weist einen ersten Gewindeabschnitt 110, einen zweiten Gewindeabschnitt 112 und einen dritten Gewindeabschnitt 114 auf. Unter dem Kopf 116 des Distanzbefestigungselements 102 ist eine Unterlegscheibe 118 vorgesehen. Zur Verbindung der Außenschale 104 mit der Profilschiene 106 wird zuerst das Distanzbefestigungselement 102 in einem Rechtslauf selbstbohrend durch die Außenschale 104 hindurch getrieben. Der erste Gewindeabschnitt 110 treibt das Distanzbefestigungselement 102 im Rechtslauf durch das durch die Spitze vorgebohrte Loch der Außenschale 104. Dies erfolgt so lange bis der erste Gewindeabschnitt 110 ausläuft. Dann bildet der zweite Gewindeabschnitt 112 mit seinem Linksgewinde einen Anschlag im Rechtslauf, wobei die Außenschale 104 zwischen dem ersten Gewindeabschnitt 110 und dem zweiten Gewindeabschnitt 112 vorübergehend zu liegen kommt.

Wie Fig. 5b weiter zeigt, wird dann im Linkslauf der zweite Gewindeabschnitt 112 mit dem Linksgewinde durch die Außenschale 104 hindurchgedreht.

Nach Durchdringen der Außenschale 104 mit dem zweiten Gewindeabschnitt 112 im Linkslauf, liegt die Bohrspitze an der Profilschiene 106 an, wohingegen sich die Außenschale 104 im gewindefreien Bereich des Distanzbefestigungselements 102 befindet. Durch Umschalten auf den Rechtslauf wird das Distanzbefestigungselement 102 über die Bohrspitze und den ersten Gewindeabschnitt 110 in die Profilschiene 106 eingebracht. Während dieses Eindrehvorgangs, kommt auch die Außenschale 104 mit dem dritten Gewindeabschnitt 114 in Eingriff, der die Außenschale 104 in Richtung des Kopfes 116 drängt.

Wie Fig. 5c zeigt, liegt nach Durchdringen der Profilschiene 106 durch den ersten Gewindeabschnitt 110 die Profilschiene 106 im Zwischenbereich zwischen dem ersten Gewindeabschnitt 110 und dem zweiten Gewindeabschnitt 112. Dieser Bereich 120 ist gewindefrei ausgestaltet, und sorgt dafür, dass nach Erreichen dieses Bereichs kein weiterer Vortrieb erfolgt. Es ist entsprechend eine Überdrehsicherung gewährleistet. Das gleiche gilt für den Bereich zwischen dem dritten Gewindeabschnitt 114, und dem Kopf 116, wobei die Außenschale 104 zwischen dem dritten Gewindeabschnitt 114 und der Unterlegscheibe 118 eingespreizt ist. Die Außenschale 104 und die Profilschiene 106 werden so über das Distanzbefestigungselement 102 genau beabstandet zueinander gehalten.

## Patentansprüche

1. Distanzbefestigungselement (10, 30, 50, 70, 102) zur Befestigung eines ersten Bauteils (22, 42, 62, 104) distanziert zu einem zweiten Bauteil (24, 44, 64, 108), umfassend einen Kopf (16, 36, 56, 80, 116), der in einen Schaft übergeht, der wiederum in einer selbstbohrenden Spitze (11, 31, 51, 71) endet, wobei nach der Spitze (11, 31, 51, 71) in Richtung des Kopfes (16, 36, 56, 80, 116) ein erster Gewindeabschnitt (12, 32, 52, 72, 110) vorgesehen ist, der ein Gewinde mit einer ersten Drehrichtung aufweist, wobei durch Eindrehung in der ersten Drehrichtung ein Loch in das erste Bauteil (22, 42, 62, 104) eingebracht werden kann, durch welches der erste Gewindeabschnitt (12, 32, 52, 72, 110) hindurchgeführt wird, und nachfolgend zum ersten Gewindeabschnitts (12, 32, 52, 72, 110) ein Anschlagelement vorgesehen ist, welches an dem zweiten Bauteil (24, 44, 64, 106) einen Anschlag bildet, **dadurch gekennzeichnet, dass** das Anschlagelement als zweiter Gewindeabschnitt (14, 34, 54, 74, 112) ausgebildet ist, der ein Gewinde mit einer der ersten Drehrichtung entgegengesetzten zweiten Drehrichtung umfasst, wobei der zweite Gewindeabschnitt (14, 34, 54, 74, 112) derart gestaltet ist, dass bei Eindrehung des Distanzbefestigungselements (10, 30, 50, 70, 102) mit der zweiten Drehrichtung, dieser durch das, nach der Penetration des ersten Gewindeabschnitts (12, 32, 52, 72, 110) verbliebene Loch im ersten Bauteil (22, 42, 62, 104) geschraubt werden kann, wonach es unter Eindrehung in erster Drehrichtung am zweiten Bauteil (24, 44, 64, 106) einen Anschlag bildet, wobei ferner der Bereich zwischen dem dem Kopf (16, 36, 56, 80, 116) zugewandten Auslauf des zweiten Gewindeabschnitts (14, 34, 54, 74, 112) und dem Kopf (16, 36, 56, 80, 116) derart gestaltet ist, dass dieser wenigstens unter Drehung in erster Drehrichtung durch das verbliebene Loch im ersten Bauteil (22, 42, 62, 104) geführt werden kann, wobei der Abstand (A2) des dem Kopf zugewandten Ende des zweiten Gewindeabschnitts (14, 34, 54, 74, 112) zur Spitze (11, 31, 51, 71) geringer ist als der Abstand (A1) des der Spitze (11, 31, 51, 71) zugewandten Ende des Gewindeabschnitts (14, 34, 54, 74, 112) zur Unterseite des Kopfes.

2. Distanzbefestigungselement nach Anspruch 1, **dadurch gekennzeichnet, dass** die erste Drehrichtung eine Rechtsdrehung ist und entsprechend der erste Gewindeabschnitt (12, 32, 52, 72, 110) ein Rechtsgewinde aufweist.

3. Distanzbefestigungselement (10, 30, 50, 70, 102) nach einem der vorangehenden Ansprüche, **dadurch gekennzeichnet, dass** zwischen dem ersten Gewindeabschnitt (12, 32, 52, 72, 110) und dem zweiten Gewindeabschnitt (14, 34, 54, 74, 112) ein gewindefreier Bereich (76) liegt.

4. Distanzbefestigungselement nach einem der vorangehenden Ansprüche, **dadurch gekennzeichnet, dass** die Gewindeausläufe des ersten Gewindeabschnitts (12, 32, 52, 72, 110) und/oder des zweiten Gewindeabschnitts (14, 34, 54, 74, 112) wenigstens an ihren zugewandten Enden in einer Ebene orthogonal zur Schraubenachse auslaufen.

5. Distanzbefestigungselement nach einem der vorangehenden Ansprüche, **dadurch gekennzeichnet, dass** der Winkel der dem Bauteil (22, 42, 62, 104, 24, 44, 64, 106) in seiner Befestigungslage zugewandten Gewindeflanke mit der Gewindehöhe geringer ist als der Winkel der Gewindehöhe mit der dem Bauteil (22, 42, 62, 104, 24, 44, 64, 106) abgewandten Gewindeflanke.

6. Distanzbefestigungselement nach einem der vorangehenden Ansprüche, **dadurch gekennzeichnet, dass** das der zweite Gewindeabschnitt (14, 34, 54, 74, 112) ein Mehrfachgewinde aufweist.

7. Distanzbefestigungselement nach einem der vorangehenden Ansprüche, **dadurch gekennzeichnet, dass** der Außendurchmesser (DA2) des Gewindes des zweiten Gewindeabschnitts (14, 34, 54, 74, 112) größer oder gleich dem Außendurchmesser (DA1) des ersten Gewindeabschnitts (12, 32, 52, 72, 110) ist.

8. Distanzbefestigungselement nach einem der vorangehenden Ansprüche, **dadurch gekennzeichnet, dass** zwischen dem zweiten Gewindeabschnitt (14, 34, 54, 74, 112) und dem Kopf ein dritter Gewindeabschnitt (40, 60, 82, 114) vorgesehen ist, der ein Gewinde mit der ersten Drehrichtung aufweist, das als Stützgewinde wirkt.

9. Distanzbefestigungselement nach Anspruch 8, **dadurch gekennzeichnet, dass** zwischen dem zweiten Gewindeabschnitt (14, 34, 54, 74, 112) und dem dritten Gewindeabschnitt (40, 60, 82, 114) ein gewindefreier Teil (18, 38, 58,, 78, 122) des Schafts (18) vorgesehen ist.

10. Bauteilverbund umfassend ein erstes Bauteil (22, 42, 62, 104), ein zweites Bauteil (24, 44, 64, 106) und ein Distanzbefestigungselement (10, 30, 50, 70, 102) nach einem der vorangehenden Ansprüche,wobei das Distanzbefestigungselement (10, 30, 50, 70, 102) das erste Bauteil (22, 42, 62, 104) und das zweite Bauteil (24, 44, 64, 106) über je einen Befestigungsbereich verbindet.

11. Bauteilverbund nach Anspruch 10, **dadurch gekennzeichnet, dass** der Abstand zwischen dem ersten Gewindeabschnitt (12, 32, 52, 72, 110) und dem zweiten Gewindeabschnitt (14, 34, 54, 74, 112) des Distanzbefestigungselements (10, 30, 50, 70, 102) der Dicke des Befestigungsbereichs des zweiten Bauteils (24, 44, 64, 106) entspricht.

12. Verfahren zur distanzierten Befestigung zweier Bauteile (22, 42, 62, 104, 24, 44, 64, 106) mit einem Distanzbefestigungselement (10, 30, 50, 70, 102) gemäß einem der vorangehenden Ansprüche 1 bis 9, wobei ein definierter Abstand zwischen den Bauteilen (22, 42, 62, 104, 24, 44, 64, 106) durch ein Distanzbefestigungselement (10, 30, 50, 70, 102) eingestellt wird, **dadurch gekennzeichnet, dass** zuerst das Distanzbefestigungselement (10, 30, 50, 70, 102) unter Drehung in einer ersten Drehrichtung in das erste Bauteil (22, 42, 62, 104) eingeschraubt wird, dann das Distanzbefestigungselement (10, 30, 50, 70, 102) in einem der ersten Drehrichtung entgegengesetzten zweiten Drehrichtung durch das erste Bauteil (22, 42, 62, 104) hindurchgeschraubt wird und anschließend das Distanzbefestigungselement (10, 30, 50, 70, 102) unter Drehung in der ersten Drehrichtung in das zweite Bauteil (24, 44, 64, 106) eingeschraubt wird.

## Claims

1. Spacer fixing element (10, 30, 50, 70, 102) for fastening a first component (22, 42, 62, 104) at a distance from a second component (24, 44, 64, 108), comprising a head (16, 36, 56, 80, 116) that transitions into a shank which latter in turn terminates in a self-tapping tip (11, 31, 51, 71), with a first threaded portion (12, 32, 52, 72, 110) being provided following the tip (11, 31, 51, 71) in the direction of the head (16, 36, 56, 80, 116), which first threaded portion has a thread with a first direction of rotation, wherein by screwing in the element in the first direction of rotation, a hole can be made into the first component (22, 42, 62, 104) through which the first threaded portion (12, 32, 52, 72, 110) is passed, and following said first threaded portion (12, 32, 52, 72, 110), a stop element is provided which forms a stop on said second component (24, 44, 64, 106), **characterized in that** said stop element is formed as a second threaded portion (14, 34, 54, 74, 112) which comprises a thread having a second direction of rotation that is opposite to the first direction of rotation, with the second threaded portion (14, 34, 54, 74, 112) being designed such that, when the spacer fixing element (10, 30, 50, 70, 102) with the second direction of rotation is screwed in, the second threaded portion can be screwed into the hole remaining in the first component (22, 42, 62, 104) after penetration by the first threaded portion (12, 32, 52, 72, 110), after which, when screwed in in the first direction of rotation, it will form a stop on the second component (24, 44, 64, 106), wherein furthermore the area between the thread run-out of the second threaded portion (14, 34, 54, 74, 112) facing the head (16, 36, 56, 80, 116) and the head (16, 36, 56, 80, 116) is designed in such a way that it will pass through the hole remaining in the first component (22, 42, 62, 104), at least it is turned in a first direction of rotation, with the distance (A2) by which the end of the second threaded portion (14, 34, 54, 74, 112) that faces the head (16, 36, 56, 80, 116) is spaced from the tip (11, 31, 51, 71) being smaller than the distance (A1) by which the end of said threaded portion (14, 34, 54, 74, 112) that faces the tip (11, 31, 51, 71) is spaced from the underside of the head.

2. Spacer fixing element according to claim 1, **characterized in that** the first direction of rotation is a right turn, and, as a result, the first threaded portion (12, 32, 52, 72, 110) has a right-hand thread.

3. Spacer fixing element (10, 30, 50, 70, 102) according to any one of the preceding claims, **characterized in that** there is a non-threaded section (76) between the first threaded portion (12, 32, 52, 72, 110) and the second threaded portion (14, 34, 54, 74, 112).

4. Spacer fixing element according to any one of the preceding claims, **characterized in that** the thread run-outs of the first threaded portion (12, 32, 52, 72, 110) and/or of the second threaded portion (14, 34, 54, 74, 112), at least at their ends facing each other, run out in a plane orthogonal to the screw axis.

5. Spacer fixing element according to any one of the preceding claims, **characterized in that** the angle defined between the thread flank that faces the component (22, 42, 62, 104, 24, 44, 64, 106) in its mounting position and the thread height is smaller than the angle defined between the thread height and the thread flank that faces away from the component (22, 42, 62, 104, 24, 44, 624, 106).

6. Spacer fixing element according to any one of the preceding claims, **characterized in that** the second threaded portion (14, 34, 54, 74, 112) has a multiple thread.

7. Spacer fixing element according to any one of the preceding claims, **characterized in that** the outer diameter (DA2) of the thread of the second threaded portion (14, 34, 54, 74, 112) is greater than or equal to the outer diameter (DA1) of the first threaded portion (12, 32, 52, 72, 110).

8. Spacer fixing element according to any one of the preceding claims, **characterized in that** a third threaded portion (40, 60, 82, 114) is provided between the second threaded portion (14, 34, 54, 74, 112) and the head, which third portion has a thread with a first direction of rotation that acts as a support thread.

9. Spacer fixing element according to claim 8, **characterized in that** there is a non-threaded section (18, 38, 58, 78, 122) between the second threaded portion (14, 34, 54, 74, 112) and the third threaded portion (40, 60, 82, 114).

10. Composite component comprising a first component (22, 42, 62, 104), a second component (24, 44, 64, 106) and a spacer fixing element (10, 30, 50, 70, 102) according to any one of the preceding claims, wherein the spacer fixing element (10, 30, 50, 70, 102) connects the first component (22, 42, 62, 104) to the second component (24, 44, 64, 106) via one fastening area each.

11. Composite component according to claim 10, **characterized in that** the distance between the first threaded portion (12, 32, 52, 72, 110) and the second threaded portion (14, 34, 54, 74, 112) of the spacer fixing element (10, 30, 50, 70, 102) corresponds to the thickness of the fastening area of the second component (24, 44, 64, 106).

12. Method for fastening two components (22, 42, 62, 104, 24, 44, 64, 106) at a distance from each another using a spacer fixing element (10, 30, 50, 70, 102) according to one of claims 1 through 9 above, wherein a defined distance between the components (22, 42, 62, 104, 24, 44, 64, 106) is adjusted using a spacer fixer element (10, 30, 50, 70, 102), **characterized in that** the spacer fixing element (10, 30, 50, 70, 102) is first screwed into the first component (22, 42, 62, 104) by turning it in a first direction of rotation, then the spacer fixing element (10, 30, 50, 70, 102) is screwed through the first component (22, 42, 62, 104) in a second direction of rotation which is opposite to the first direction of rotation, and then the spacer fixing element (10, 30, 50, 70, 102) is screwed into the second component (24, 44, 64, 106) by turning it in the first direction of rotation.

## Revendications

1. Elément de fixation espaceur (10, 30, 50, 70, 102) pour la fixation d'un premier composant (22, 42, 62, 104) à distance d'un deuxième composant (24, 44, 64, 108), comprenant une tête (16, 36, 56, 80, 116) prolongée par une tige qui se termine elle-même en pointe autotaraudeuse (11, 31, 51, 71), une première partie filetée (12, 32, 52, 72, 110) étant prévue après la pointe (11, 31, 51, 71) dans la direction de la tête (16, 36, 56, 80, 116), présentant un filet ayant un premier sens de rotation, une rotation dans le premier sens de rotation permettant de former un trou dans le premier composant (22, 42, 62, 104), par lequel la première partie filetée (12, 32, 52, 72, 110) est passée, et un élément de butée étant prévu à la suite de la première partie filetée (12, 32, 52, 72, 110), lequel forme une butée contre le deuxième composant (24, 44, 64, 106), **caractérisé en ce que** l'élément de butée est réalisé comme deuxième partie filetée (14, 34, 54, 74, 112) comprenant un filet ayant un deuxième sens de rotation contraire au premier sens de rotation, la deuxième partie filetée (14, 34, 54, 74, 112) étant configurée de telle manière qu'en cas de rotation de l'élément de fixation espaceur (10, 30, 50, 70, 102) dans le deuxième sens de rotation, celle-ci peut être vissée à travers le trou restant dans le premier composant (22, 42, 62, 104) après pénétration de la première partie filetée (12, 32, 52, 72, 110), ce après quoi elle forme une butée contre le deuxième composant (24, 44, 64, 106) par rotation dans le premier sens de rotation, la partie entre la fin de la deuxième partie filetée (14, 34, 54, 74, 112) dirigée vers la tête (16, 36, 56, 80, 116) et la tête (16, 36, 56, 80, 116) étant en outre configurée de manière à pouvoir être passée dans le trou restant dans le premier composant (22, 42, 62, 104) au moins par rotation dans le premier sens de rotation, l'intervalle (A2) entre l'extrémité de la deuxième partie filetée (14, 34, 54, 74, 112) dirigée vers la tête et la pointe (11, 31, 51, 71) étant inférieur à l'intervalle (A1) entre l'extrémité de la partie filetée (14, 34, 54, 74, 112) dirigée vers la pointe (11, 31, 51, 71) et le dessous de la tête.

2. Elément de fixation espaceur selon la revendication 1, **caractérisé en ce que** le premier sens de rotation est vers la droite et que la première partie filetée (12, 32, 52, 72, 110) présente en conséquence un filetage à droite.

3. Elément de fixation espaceur (10, 30, 50, 70, 102) selon l'une des revendications précédentes, **caractérisé en ce qu'**une zone non filetée (76) est présenté entre la première partie filetée (12, 32, 52, 72, 110) et la deuxième partie filetée (14, 34, 54, 74, 112).

4. Elément de fixation espaceur selon l'une des revendications précédentes, **caractérisé en ce que** les fins de filet de la première partie filetée (12, 32, 52, 72, 110) et/ou de la deuxième partie filetée (14, 34, 54, 74, 112) sont situés sur un plan orthogonal à l'axe de la vis au moins à leurs extrémités opposées.

5. Elément de fixation espaceur selon l'une des revendications précédentes, **caractérisé en ce que** l'angle formé par le flanc de filet proche du composant (22, 42, 62, 104, 24, 44, 64, 106) dans sa position de fixation avec la hauteur de filet est inférieur à l'angle formé par la hauteur de filet avec le flanc de filet distant du composant (22, 42, 62, 104, 24, 44, 64, 106).

6. Elément de fixation espaceur selon l'une des revendications précédentes, **caractérisé en ce que** la deuxième partie filetée (14, 34, 54, 74, 112) a un filetage multiple.

7. Elément de fixation espaceur selon l'une des revendications précédentes, **caractérisé en ce que** le diamètre extérieur (DA2) du filet de la deuxième partie filetée (14, 34, 54, 74, 112) est supérieur ou égal au diamètre extérieur (DA1) de la première partie filetée (12, 32, 52, 72, 110).

8. Elément de fixation espaceur selon l'une des revendications précédentes, **caractérisé en ce qu'**une troisième partie filetée (40, 60, 82, 114) est prévue entre la deuxième partie filetée (14, 34, 54, 74, 112) et la tête, laquelle présente un filet ayant le premier sens de rotation, agissant comme filet d'appui.

9. Elément de fixation espaceur selon la revendication 8, **caractérisé en ce qu'**une zone non filetée (18, 38, 58, 78, 122) de la tige (18) est prévue entre la deuxième partie filetée (14, 34, 54, 74, 112) et la troisième partie filetée (40, 60, 82, 114).

10. Structure composite comprenant un premier composant (22, 42, 62, 104), un deuxième composant (24, 44, 64, 106) et un élément de fixation espaceur (10, 30, 50, 70, 102) selon l'une des revendications précédentes, dans laquelle l'élément de fixation espaceur (10, 30, 50, 70, 102) raccorde le premier composant (22, 42, 62, 104) et le deuxième composant (24, 44, 64, 106) au moyen d'une zone de fixation chacun.

11. Structure composite selon la revendication 10, **caractérisé en ce que** l'intervalle entre la première partie filetée (12, 32, 52, 72, 110) et la deuxième partie filetée (14, 34, 54, 74, 112) de l'élément de fixation espaceur (10, 30, 50, 70, 102) correspond à l'épaisseur de la zone de fixation du deuxième composant (24, 44, 64, 106).

12. Procédé de fixation à distance de deux composants (22, 42, 62, 104, 24, 44, 64, 106) avec un élément de fixation espaceur (10, 30, 50, 70, 102) selon l'une des revendications 1 à 9, dans lequel un intervalle défini entre les composants (22, 42, 62, 104, 24, 44, 64, 106) est ajusté par un élément de fixation espaceur (10, 30, 50, 70, 102), **caractérisé en ce que** l'élément de fixation espaceur (10, 30, 50, 70, 102) est d'abord vissé dans le premier composant (22, 42, 62, 104) par rotation dans un premier sens de rotation, l'élément de fixation espaceur (10, 30, 50, 70, 102) est ensuite vissé au travers du premier composant (22, 42, 62, 104) dans un deuxième sens de rotation opposé au premier sens de rotation et l'élément de fixation espaceur (10, 30, 50, 70, 102) est enfin vissé dans le deuxième composant (24, 44, 64, 106) par rotation dans le premier sens de rotation.
